# EUROPÄISCHE PATENTSCHRIFT

(11) **EP 0 966 652 B1**
(45) Veröffentlichungstag und Bekanntmachung des Hinweises auf die Patenterteilung: **28.04.2004**
(21) Anmeldenummer: 98913519.9
(22) Anmeldetag: 21.02.1998
(51) Int. Cl.: G01B 21/26, G01B 7/315, G01C 19/42

(54) **VORRICHTUNG UND VERFAHREN ZUR ACHSVERMESSUNG**
AXLE MEASURING DEVICE AND METHOD
DISPOSITIF ET PROCEDE DE MESURE POUR ESSIEUX

(30) Priorität: 15.03.1997 DE 19710837
(43) Veröffentlichungstag der Anmeldung: 29.12.1999
(73) Patentinhaber: ROBERT BOSCH GMBH, 70442 Stuttgart (DE)
(72) Erfinder: ADOLPH, Dietrich, D-73095 Albershausen (DE)
(86) Internationale Anmeldenummer: PCT/DE1998/000527
(87) Internationale Veröffentlichungsnummer: WO 1998/041816

(56) Entgegenhaltungen:
- EP-A- 0 313 563
- EP-A- 0 692 421
- WO-A-96/21138
- US-A- 5 357 817
- US-A- 5 410 481

## Beschreibung

### Stand der Technik

Die Erfindung geht aus von einer Vorrichtung und einem Verfahren zur Achsvermessung nach der Gattung der unabhängigen Ansprüche. Aus der EP-A 0 313 563 sind ein Verfahren und eine Vorrichtung zur Radstellungsmessung bekannt, wobei als Bezugsbasis ein rotierender, kardanisch aufgehängter Kreisel verwendet wird. Ein Winkelmeßgerät ist am ersten Rad justiert. Die daraufhin gestartete Rotation des Kreisels garantiert, daß sich die als Bezugsachse verwendete Rotationsachse des Kreisels im weiteren Verlauf der Messung nicht ändert. Das Winkelmeßgerät wird an das nächste Rad gebracht, wobei der sich dann einstellende Winkel zwischen Rad und Bezugsachse gemessen wird. Diese Vorgehensweise wiederholt sich für alle Räder. Die Richtungsdifferenzen der übrigen Räder zu dem ersten Rad werden erfaßt, gespeichert und anschließend zur Ermittlung der Radstellungswerte gegeneinander verrechnet. Die Einschwingzeiten des die Bezugsachse bildenden Kreisels liegen in einer Größenordnung von 15 Minuten, wenn hohe Genauigkeiten gefordert werden. Als zusätzlich zum Kreisel notwendiger Winkelgeber erfaßt beispielsweise ein inkrementeller Winkelgeber die Winkeldifferenz zwischen der Ausgangslage und der Meßlage.

Der Erfindung liegt die Aufgabe zugrunde, die Dauer der Achsvermessung zu verkürzen. Sie wird durch die Merkmale der unabhängigen Ansprüche gelöst.

### Vorteile der Erfindung

Die erfindungsgemäße Vorrichtung zur Achsvermessung eines Fahrzeugs, durch die zumindest ein Winkel zwischen einem Rad des Fahrzeugs und einer Bezugsrichtung ermittelbar ist, zeichnet sich dadurch aus, daß eine Erfassung des Winkels mit Hilfe eines Gebers erfolgt, der zumindest einen Drehratensensor enthält, dessen Ausgangssignal integriert ist. Der Einsatz von Drehratensensoren zur Achsvermessung ermöglicht es, auf eine exakte Ausrichtung der Geber zueinander am jeweiligen Rad des Fahrzeugs zu verzichten. Lange Einstell- und Justagezeiten lassen sich vermeiden. Da jeder für die Achsvermessung verwendete Geber eine bekannte relative Lage zu der Bezugsrichtung, die nicht vom Fahrzeug oder der Anordnung eines weiteren Gebers abhängt, einnimmt, spielen große Achsabstände oder Achsversatz des zu vermessenden Fahrzeugs keine Rolle. Die Geber sind gleichermaßen einsetzbar für PKW, LKW, Anhänger oder Mehrachsfahrzeuge. Die durch Integration der Drehraten erhaltenen Drehwinkel dienen als Maß für einen Spur- oder Sturzwinkel des Fahrzeugs. Der Drehwinkel gibt die Abweichung der Drehachskoordinaten des Rades von der Bezugsrichtung an. Dieser Winkel dient als Datenbasis für Algorithmen zur Spur- oder Sturzwinkelermittlung.

In einer zweckmäßigen Ausgestaltung enthält ein Geber drei Drehratensensoren, die ein orthogonales System bilden. Dadurch läßt sich die Bezugsrichtung vom Fahrzeug vollständig entkoppeln. Alle Informationen werden erfaßt, die zur Kompensation von solchen Störungen notwendig sind, die Translationsbewegungen verursachen.

In einer Ausgestaltung des erfindungsgemäßen Verfahrens zur Achsvermessung ist ein Geber vorgesehen, der zumindest einen Drehratensensor enthält, dessen Ausgangssignal integriert ist. Der Geber wird so abgestellt, daß er eine bekannte Lage zu einer Bezugsrichtung einnimmt. Anschließend wird er an einem Rad des Fahrzeugs angebracht. Der sich einstellende Winkel ist ein Maß für einen Spur- oder Sturzwinkel des Fahrzeugrads. Der Drehratensensor erfaßt die relative Lage des Gebers zur Bezugsrichtung. Der Geber ist nicht mehr in einer vordefinierten Lage am Rad des Fahrzeugs anzuordnen. Zeitraubende Justageverfahren erübrigen sich damit.

In einer zweckmäßigen Weiterbildung ist ein dritter Schritt vorgesehen, in dem die relative Lage der Drehachskoordinaten des Rads zu der Bezugsrichtung ermittelt wird. Auftretender Winkelversatz der Radachsen zueinander gibt über durchzuführende Korrekturmaßnahmen der Achsgeometrie Aufschluß.

Eine zweckmäßige Weiterbildung sieht die Kompensation der Erdrotation während der Winkelerfassung vor. Die Genauigkeit der Winkelmessung erhöht sich. Indem der Drehratensensor im Ruhezustand diese Störgröße kontinuierlich erfaßt, kann ein wartungsarmes, selbstkalibrierendes System realisiert werden.

In einem vierter Schritt einer zweckmäßigen Weiterbildung wird der Geber in der gleichen Position wie im ersten Schritt abgestellt. Die vorangegangene Messung ist dann ungültig, wenn der sich im vierten Schritt einstellende Winkel signifikant von Null abweicht. Die Messung beeinträchtigende Störungen lassen sich ohne großen Aufwand kontrollieren. Die Maßnahme dient der bedienerfreundlichen Automatisierung des Meßverfahrens.

Weitere zweckmäßige Weiterbildungen aus weiteren abhängigen Ansprüchen ergeben sich aus der Beschreibung.

### Zeichnung

Ausführungsbeispiele sind in der Zeichnung dargestellt und nachfolgend näher erläutert. Es zeigen Figur 1 ein Blockschaltbild, Figur 2 eine räumliche Anordnung sowie Figur 3 ein Flußdiagramm verschiedener Ausführungsbeispiele.

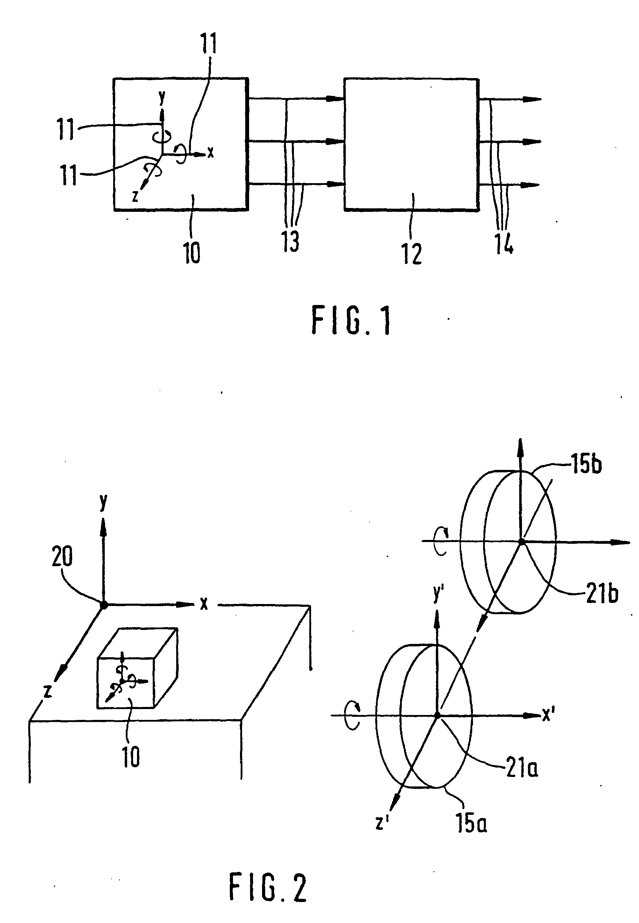

Ein Geber 10 ist aus drei orthogonal zueinander angeordneten Drehratensensoren 11 aufgebaut. Jeder der Drehratensensoren 11 gibt eine Drehrate 13 an eine Signalverarbeitung 12 ab. Sie formt die Eingangssignale in Winkel 14 um. Gemäß Figur 2 nimmt der Geber 10 eine bekannte Lage zu einer Bezugsrichtung 20 ein. In räumlicher Nähe zum Geber 10 befinden sich zwei zu vermessende Räder 15a, 15b. Jedem Rad 15a, 15b sind entsprechende Drehachskoordinaten 21a, 21b zugeordnet, deren eine Achse mit einer Drehachse des entsprechenden Rades 15a, 15b zusammenfällt.

Drehratensensoren 11 erfassen eine Drehrate 13 eines um eine Achse rotierenden Teils. Diesbezügliche Meßsysteme basieren auf unterschiedlichen physikalischen Effekten. Winkelgeschwindigkeit ist ein Synonym für die zu erfassende Drehrate. Bei einem mechanischen Kreisel ruft die zu messende Rotation ein Moment hervor, das proportional zu der Drehrate ist. Translatorische Einflüsse auf den Kreisel müssen mit Hilfe entsprechender Fehlermodelle kompensiert werden. Bei einem faseroptischen Kreisel ist die Laufzeitdifferenz des Lichts aufgrund der Rotation ein Maß für die zu messende Drehrate. Die von einem Interferenzdetektor ermittelte Phasenverschiebung des Meßsignals in Bezug auf ein Referenzsignal ist proportional zu der Winkelgeschwindigkeit. Bei einem Ringlaserkreisel umlaufen zwei Lichtwellenzüge eine Fläche gegensinnig. Die zu messende Rotation des Ringlasers ändert die wirksame Ringresonatorlänge. Die daraus resultierende Frequenzdifferenz der Lichtfrequenzen der Lichtwellenzüge ist ein Maß für die Drehrate. Weitergehende Details lassen sich dem Artikel "Hochgenaue Kreisel und Beschleunigungssensoren", E. v. Hinüber, Elektronik 1/1996 entnehmen.

Bei oszillierenden Kreiseln werden schwingfähige Strukturen, beispielsweise als Stimmgabel oder zylindrischer Körper ausgeführt, angeregt. Beschleunigungsaufnehmer erfassen die auf der zu messenden Rotation beruhende Coriolis-Beschleunigung als Maß für die Drehrate. Wegen Einzelheiten siehe auch "Yaw rate sensor for vehicle dynamics control system", A. Reppich, R. Willig, SAE-Paper, Detroit 1995. Der Drehratensensor 11 ist jedoch keinesfalls auf die ausgeführten physikalischen Prinzipien beschränkt. Wesentlich vielmehr ist, daß als Ausgangssignal des Drehratensensors 11 die Drehrate 13 zur Verfügung steht.

Für die Achsvermessung ist von Interesse, um welchen Winkel die einzelnen Radgeometrien zueinander versetzt sind. Die Signalverarbeitung 12 wandelt die Drehrate 13 in einen-Winkel 14 durch Integration des zeitlichen Verlaufs der Drehrate 13 um. Erfaßt der Drehratensensor 11 beispielsweise eine Drehrate 13 um die X-Achse, so gibt der zugehörige Winkel 14 an, wie weit sich die y/z-Ebene um die X-Achse seit dem Start der Integration gedreht hat. Der Rotation ist in der Regel eine translatorische Bewegung überlagert. Diese Störkomponenten müssen über Transformations-Differentialgleichungen kompensiert werden. Liegt ein kontinuierlicher Verlauf der Drehrate 13 vor, kann die Integration durch elektronische Bauteile erfolgen. Bei diskreten Werten stellen bekannte Algorithmen den Winkel 14 zur Verfügung. Der Signalverarbeitung 12 ist der Startzeitpunkt der Integration mitzuteilen. Zu diesem Zeitpunkt befindet sich der Geber 10 in seiner Referenzlage. Ist der Geber 10 aus drei orthogonal zueinander angeordneten Drehratensensoren 11 aufgebaut, sind alle drei Drehraten 13 zu integrieren und bei Translation zu kompensieren. Neben der Translation tritt als weitere Störgröße die Erdrotation in Erscheinung. Deren Einfluß auf die Horizontalwinkel läßt sich in Abhängigkeit von der Zeit, die seit dem Start der Integration verstrichen ist, und dem Sinus der geographischen Breite des Meßplatzes berücksichtigen. Befindet sich der Drehratensensor 11 in Ruhe, kann dieser den von der Erdrotation verursachten Winkel 14 in Abhängigkeit von der Zeit bestimmen. Auf Basis dieser Störgrößenermittlung wird die Erdrotation bei der nächsten Messung kompensiert. Der Drehratensensor 11 kalibriert sich selbst.

Die Meßsignale des Drehratensensors 11 werden vorzugsweise lokal im jeweiligen Geber 10 aufbereitet. Eine Alternative besteht darin, die Drehrate 13 unverarbeitet an eine zentrale Auswerteeinrichtung weiterzuleiten, die die Integration durchführt. Die entsprechende Datenübertragung kann leitungsgebunden, per Funk oder Infrarot erfolgen.

Für die Achsvermessung sind ein oder mehrere Geber 10 erforderlich. Deren Daten werden von einem zentralen Anzeige- und Bediengerät verarbeitet.

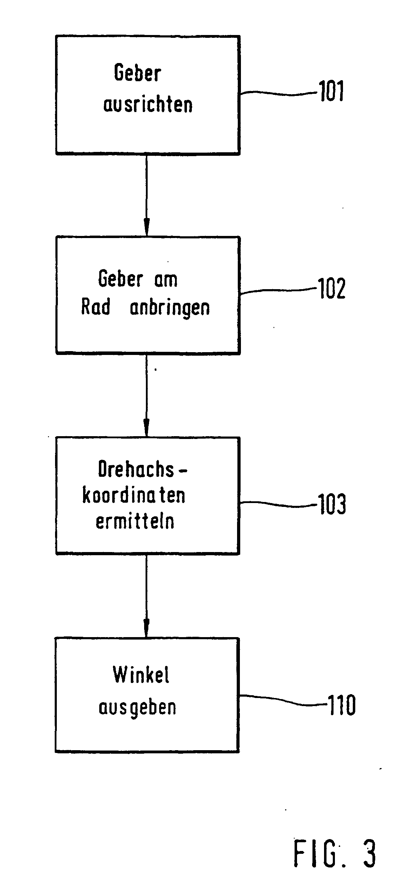

In Übereinstimmung mit Figur 3 wird nachfolgend ein Achsvermessungsvorgang erläutert. Die für die Achsvermessung vorgesehenen Geber 10 werden ausgerichtet, Schritt 101. Der jeweilige Geber 10 ist hierzu in eine bekannte Ausrichtung zu der Bezugsrichtung 20 zu bringen. Als Bezugsrichtung 20 dienen beispielsweise die Koordinaten eines Meßtisches, wie in Figur 2 angedeutet. Der Geber 10 ist so anzuordnen, daß die Rotationsachsen der im Geber 10 enthaltenen Drehratensensoren 11 um einen bekannten Winkel von den entsprechenden Achsen der Bezugsrichtung 20 verdreht sind. Vereinfachend wird weiterhin angenommen, daß der Geber 10 dann ausgerichtet ist, wenn die Achsen der Drehratensensoren 11 des Gebers 10 parallel sind zu den Achsen der Bezugsrichtung 20. Der sich so einstellende bekannte Versatzwinkel zwischen den Achsen der Drehratensensoren 11 und der Bezugsrichtung 20 beträgt Null. Diese Anfangswerte sind bei der zentralen Auswerteeinrichtung, die den Spurwinkel bestimmt, hinterlegt. Da für die Spur- und Sturzwinkel immer nur Winkeldifferenzen von Bedeutung sind, genügt es, die Geber 10 um bekannte Winkel versetzt zueinander anzuordnen. Nach der Ausrichtung gemäß Schritt 101 wird die Integration der entsprechenden Drehraten 13 gestartet.

Anschließend werden die Geber am Rad 15a, 15b angebracht, Schritt 102. Die Geber 10 sind prinzipiell beliebig am Rad zu befestigen, eine spezielle Ausrichtung in Bezug auf das zu vermessende Rad 15a, 15b ist nicht nötig. Hierzu sind beispielsweise an den Radfelgen Aufnahmevorrichtungen für die Sensoren vorzusehen. Eine Befestigung der Geber 10 durch Klammern oder Magnete ist ebenso denkbar. Einer Ausrichtung zur jeweiligen Radachse bedarf es nicht. Durch Integration der Drehraten 13 sind die Winkel 14 erfaßt, um die sich das von den Achsen der Drehratensensoren 11 aufgebaute Koordinatensystem zur Bezugsrichtung 20 hin seit dem Startzeitpunkt der Integration verdreht hat.

Anschließend sind die Drehachskoordinaten 21a, 21b der jeweiligen Räder 15a, 15b zu ermitteln, Schritt 103. Zu diesem Zweck bestimmt der Geber 10 die Dreh- und Taumelbewegung, die der Geber 10 durch Drehen des Rads 15a, 15b erfährt. Das Rad kann hierzu angehoben oder gerollt werden. Die Vorgehensweise der Drehachskoordinatenermittlung bei angehobenem Rad ist als Felgenschlagkompensation bekannt und beispielsweise in DE-PS 29 11 580 beschrieben. Bei der Felgenschlagkompensation ist das Fahrzeug durch eine in etwa zwei Drittel Radumdrehung auf den eigentlichen Meßplatz, Hebebühne oder Werkstattgrube, zu rollen. Damit ist bekannt, um welche Winkel die jeweiligen Drehachskoordinaten 21a, 21b der entsprechenden Räder 15a, 15b von der Bezugsrichtung 20 abweichen.

Die gewünschten Winkel 14 werden ermittelt und ausgegeben, Schritt 110. Der Winkelversatz zwischen Drehachskoordinaten 21a, 21b und Referenzrichtung und damit auch zwischen den einzelnen Drehachskoordinaten 21a, 21b ist bekannt und wird dem zentralen Rechner zugeführt, der daraus Spurwinkel oder Sturzwinkel berechnet. Stehen die lenkbaren Räder 15a, 15b auf Drehplatten, lassen sich auch Nachlauf oder Spreizung bestimmen. Dies ist beispielsweise in "steering geometry and caster measurement", D. B. January, SAE-Paper, Detroit 1985, beschrieben.

Eine Überprüfung der Messung kann erfolgen, indem die verwendeten Geber 10 nach Abschluß der Messung in die Ausgangslage, wie in der Beschreibung zu Schritt 101 ausgeführt, zurückgebracht werden. Bei einer korrekten Messung dürfen sich die an den Gebern 10 einstellenden Winkel 14 nicht signifikant von dem wert Null unterscheiden. Treten erhebliche Abweichungen auf, so sind diese dem Benutzer mitzuteilen.

Eine Kombination von Vorrichtung und Verfahren vereinigt deren spezifische Vorteile.

Alternative Ausführungsformen bemühen sich um eine Vereinfachung des Gebers 10.

Bei Verzicht auf einen der drei Drehratensensoren 11, dessen Drehachse horizontal verläuft, können diesbezügliche Richtungsänderungen mit einem Pendelsystem bestimmt werden.

Eine weitere Vereinfachung des Gebers 10 unter Verwendung nur eines die Richtungsänderungen in der Horizontalebene erfassenden Drehratensensors 11 ist dann möglich, wenn die Geber 10 im wesentlichen senkrecht transportiert und eingesetzt werden. Hierzu werden die Geber 10 hängend bewegt und an den im wesentlichen waagerechten Radadaptern in einer Ebene pendelnd befestigt, um den Spurwinkel zu ermitteln. Einen solchen Drehratensensor 11 mit eingeschränkten Freiheitsgraden realisiert beispielsweise ein in einer Ebene schwingendes Pendel, das bifilar aufgehängt ist.

Eine weitere Variante unter Verwendung nur eines Drehratensensors 11 besteht darin, diesen in eine bekannte Lage zu einer im wesentlichen vertikalen Bezugsrichtung 20 zu bringen, um Richtungsänderungen in der Vertikalebene beispielsweise zur Sturzwinkelbestimmung zu erfassen.

Die erforderlichen Messungen lassen sich grundsätzlich auch nacheinander durchführen, wozu lediglich ein Geber 10 erforderlich ist. Der Meßwertverarbeitung wird mitgeteilt, wann eine Messung an welchem Rad 15 abgeschlossen ist. Die Störkomponente Erdrotation muß jedoch ständig kompensiert werden.

## Patentansprüche

1. Vorrichtung zur Achsvermessung eines Fahrzeugs, durch die zumindest ein Winkel (14) zwischen einem Rad (15a, 15b) des Fahrzeugs und einer Bezugsrichtung (20) ermittelbar ist, **dadurch gekennzeichnet, daß** eine Erfassung des Winkels (14) mit Hilfe wenigstens eines Gebers (10) erfolgt, der zumindest einen Drehratensensor (11) enthält, dessen Ausgangssignal integriert ist.

2. Vorrichtung nach Anspruch 1, **dadurch gekennzeichnet, daß** der Geber (10) drei Drehratensensoren (11) enthält, die ein Orthogonalsystem bilden.

3. Vorrichtung nach einem der vorhergehenden Ansprüche, **dadurch gekennzeichnet, daß** die Bezugsrichtung (20) unabhängig vom Fahrzeug gewählt ist.

4. Verfahren zur Achsvermessung eines Fahrzeugs, mit einem Geber (10), durch den ein Winkel (14) zumindest eines Gebers (10) zu einer Bezugsrichtung (20) ermittelt wird, **dadurch gekennzeichnet, daß** der Geber (10) zumindest einen Drehratensensor (11) enthält, dessen Ausgangssignal integriert wird, daß in einem ersten Schritt (101) der Geber (10) so abgestellt wird, daß er eine bekannte Lage zu der Bezugsrichtung (20) einnimmt, daß der Geber in einem zweiten Schritt (102) an einem Rad (15a, 15b) des Fahrzeugs angebracht wird, daß der Winkel (14), der sich an dem Rad (15a, 15b) des Fahrzeugs einstellt ein Maß ist für eine Richtung der Radachse.

5. Verfahren nach Anspruch 4, **dadurch gekennzeichnet, daß** in einem dritten Schritt (103) die relative Lage von Drehachskoordinaten (21a, 21b) des Rads (15a, 15b) zu der Bezugsrichtung (20) ermittelt wird.

6. Verfahren nach einem der Ansprüche 4 oder 5, **dadurch gekennzeichnet, daß** der Einfluß der Erdrotation während einer Ermittlung des Winkels (14) kompensiert wird.

7. Verfahren nach einem der vorhergehenden Ansprüche 4 bis 6, **dadurch gekennzeichnet, daß** in einem vierten Schritt (104) der Geber wie im ersten Schritt (101) abgestellt wird und die vorangegangene Messung für ungültig erkannt wird, wenn der sich im vierten Schritt (104) einstellende Winkel (14) signifikant von Null abweicht.

## Claims

1. Vehicle axle measuring device which can be used to determine at least one angle (14) between a wheel (15a, 15b) of the vehicle and a reference direction (20), **characterized in that** the angle (14) is detected with the aid of at least one transmitter (10) which includes at least one rate-of-rotation sensor (11) whose output signal is integrated.

2. Device according to Claim 1, **characterized in that** the transmitter (10) includes three rate-of-rotation sensors (11) which form an orthogonal system.

3. Device according to one of the preceding claims, **characterized in that** the reference direction (20) is selected independently of the vehicle.

4. Vehicle axle measuring method having a transmitter (10) which is used to determine an angle (14) of at least one transmitter (10) relative to a reference direction (20), **characterized in that** the transmitter (10) includes at least one rate-of-rotation sensor (11) whose output signal is integrated, **in that**, in a first step (101), the transmitter (10) is placed in such a way that it assumes a known position relative to the reference direction (20), **in that** the transmitter is mounted in a second step (102) on a wheel (15a, 15b) of the vehicle, and **in that** the angle (14) which is set up at the wheel (15a, 15b) is a measure of a direction of the wheel axle.

5. Method according to Claim 4, **characterized in that** in a third step (103) the relative position of rotation axis coordinates (21a, 21b) of the wheel (15a, 15b) is determined in relation to the reference direction (20).

6. Method according to one of Claims 4 or 5, **characterized in that** the influence of the rotation of the earth is compensated during a determination of the angle (14).

7. Method according to one of the preceding Claims 4 to 6, **characterized in that** in a fourth step (104) the transmitter is placed as in the first step (101), and the preceding measurement is found to be invalid when the angle (14) set up in the fourth step (104) deviates significantly from zero.

## Revendications

1. Dispositif pour la mesure de l'essieu d'un véhicule, qui permet de déterminer au moins un angle (14) entre une roue (15a, 15b) du véhicule et une direction de référence (20),
**caractérisé en ce qu'**
une acquisition de l'angle (14) s'effectue à l'aide d'au moins un transmetteur (10) qui renferme un capteur de vitesse de rotation (11) dont le signal de sortie est intégré.

2. Dispositif selon la revendication 1,
**caractérisé en ce que**
le transmetteur (10) comprend trois capteurs de taux de rotation (11) qui forment un système orthogonal.

3. Dispositif selon une des revendications précédentes,
**caractérisé en ce que**
la direction de référence (20) est choisie indépendamment du véhicule.

4. Procédé pour la mesure de l'essieu d'un véhicule comprenant un transmetteur (10) par lequel est mesuré un angle (14) d'au moins un transmetteur (10) par rapport à une direction de référence (20),
**caractérisé en ce que**
le détecteur (10) comprend au moins un capteur de vitesse de rotation (11) dont le signal de sortie est intégré, dans une première étape (101), le transmetteur (10) est déplacé de manière à prendre une position connue par rapport à la direction de référence (20), dans une deuxième étape (102), le transmetteur est monté sur une roue (15a, 15b) du véhicule, et l'angle (14) qui s'établit sur la roue (15a, 15b) du véhicule est une mesure pour une direction de l'axe de la roue.

5. Procédé selon la revendication 4,
**caractérisé en ce que**
dans une troisième étape (103), on mesure la position relative des coordonnées de l'axe de rotation (21a, 21b) de la roue (15a, 15b) par rapport à la direction de référence (20).

6. Procédé selon une des revendications 4 ou 5,
**caractérisé en ce que**
l'influence de la rotation de la terre pendant la mesure de l'angle (14) est compensée.

7. Procédé selon une des revendications précédentes 4 à 6,
**caractérisé en ce que**
dans une quatrième étape (104), le transmetteur est déplacé comme dans la première étape (101) et la mesure précédente est reconnue comme non valable lorsque l'angle (14) qui s'établit dans la quatrième étape (104) diffère significativement de 0.
